# EUROPEAN PATENT SPECIFICATION

(11) **EP 3 460 305 B1**
(45) Date of publication and mention of the grant of the patent: **14.10.2020**
(21) Application number: 17202505.8
(22) Date of filing: 20.11.2017
(51) Int. Cl.: F16L 21/08

(54) **RESTRAINING CLAMP RING FOR JOINING TWO PIPES AND PIPES TO FITTINGS**
RÜCKHALTEKLEMMRING ZUM VERBINDEN VON ZWEI ROHREN UND VON ROHREN MIT VERBINDUNGEN
BAGUE DE SERRAGE DE RETENUE PERMETTANT DE RACCORDER DEUX TUYAUX ET DES TUYAUX À DES RACCORDS

(30) Priority: 23.09.2017 IN 201731033786
(43) Date of publication of application: 27.03.2019
(73) Proprietor: Electrosteel Castings Limited, Sukhchar Kolkata 700115 WB (IN)
(72) Inventor: SENGUPTA, Abhijit, 700115 West Bengal (IN); DAS, Sanjib, 700115 West Bengal (IN)
(74) Representative: Hedges, Martin Nicholas

(56) References cited:
- EP-A2- 1 055 858
- DE-U1-202013 103 431

## Description

### FIELD OF INVENTION

The present invention relates to a pipe joint assembly adapted including a clamp device for use in pipe fittings. More particularly, the present invention relates to a Restraining Clamp Ring for jointing two pipes and pipes to fittings to avoid axial separation of pipes or fittings, during pressurization of the pipe line.

### BACKGROUND ART

One well known form of pipe joint, for example, comprises a bell end provided on one pipe, an inter-fitting spigot end on an attached pipe, and a sealing gasket interposed between the bell and spigot ends. Numerous locking arrangements have been proposed for use in such joints to prevent axial movement of the spigot end relative to the bell end. Thus, for example, one such locking arrangement employs a split ring located inside of the bell end and which can be adjusted radially by a ring adjustment mechanism between a relaxed condition allowing for axial movement of the respective pipe ends and a tightened position in which the ring engages a circumferential bead or the like on one of the pipe ends to preclude relative axial movement there between in a direction separating the pipes.

In some devices, the adjustment mechanism for the snap ring comprises transverse pieces which extend axially from the respective ends of the split snap ring out of the mouth of the bell end, radial lugs on the outer ends of the transverse pieces, and a threaded stud connecting the lugs whereby radial adjustment of the segmented ring within the bell end as between the relaxed and tightened conditions is effected externally of the bell end by rotating the threaded stud nuts in the appropriate direction.

In the prior art, a French application FR2376985 (A1) discloses a socket or sleeve pipe coupling having an outer clamp ring with internal cones to successively deform outer coupling member. The pipe coupling is affected by clamp rings with conical inner surface being secured over the socket end or the outer sleeve. This produces a sealed joint between the pipe and sleeve by inward deformation. Each clamp ring has a first conical inner portion followed by a cylindrical portion and a second conical portion. The diameter of the cylindrical portion is equals to the small diameter of the first and the large diameter of the second conical portion. The outer diameter of the sleeve before fixing the ring approximately equals the large diameter of the first portion.

In another prior art, a European application EP2336624 (A2) discloses a clamp ring for use in a socket joint. The disclosed fitting has a socket for forming an inward projecting socket edge at a socket opening, and a clamping ring with ring segment shape clamping ring parts. Ring sections of the socket engage in a socket inner chamber in a form-fit manner. The ring sections are pre-stressed with each other at a pipe at clamping ring bars by clamping elements. The clamping ring parts at a side of the clamping elements are formed with support elements, where the side is turned away from the socket. The support elements are supported at an external surface of the pipe.

In yet another prior art, a European application EP2940362 (A1) discloses a spigot-and-socket pipe joint. A stopper ring of the joint has a split structure comprising a plurality of stoppers. Two or more fixing holes are provided in the face of the outer diameter of each stopper for installing an elastic support. During installation, the stoppers are first installed in a stopper chamber one by one to form a whole and finally a spigot is installed into a socket. During the installation, a spigot projection can push the stopper to move backwards and compress the elastic support on the stopper ring when passing through the stopper ring, and the spigot projection would pull the spigot back after passing through the stopper ring, so that the stopper presses against the outer surface of the spigot by the elastic support. The spigot-and-socket pipe joint in the invention has simple structure, convenience in installation and disassembly, strong anti-slip capability and wide application.

Another prior art arrangement, upon which the pre-characterising portion of claim 1 is based, is known from EP 1055858 and comprises a restraining clamp ring assembly adapted for use with pipe joint assembly and / or pipe fittings of the type where the pipe joint assembly includes overlapping of a socket end of one pipe and a taper end of another pipe, the socket having a cavity with at least two openings; the clamping ring assembly comprising two ring type clamping halves, each clamping half having two lever arms extending axially therefrom so as, in use, to extend axially along said other pipe, a hole being formed in each lever arm spaced apart from the end of the lever arm, a clamping bolt being engageable through the holes of adjacent pairs of lever arms when the clamping halves are engaged so as to clamp said lever arms together, each clamping half further having a "V" shaped recess provided on its inner circumferential surface by means of which, in use, the taper end of said another pipe is held inside the socket.

While pipe joints of the general type referred to above are in extensive use and are generally regarded as being satisfactory in performance, the present invention seeks to improve the design thereof in certain respects, more particularly in regard to the locking ring structure, so as to provide, inter alia, improved joint performance and characteristics.

### SUMMARY OF INVENTION

It is a principal object of the invention to provide an improved form of restrained pipe joint of the general type referred to, particularly for use in pipes, which has a clamp assembly structure affording greater flexibility, and accommodating a higher degree of misalignment as between the respective pipe ends than in known joints, while maintaining an adequate seal between the pipe ends and adequate axial restraint thereof.

It is another object of the present invention to propose a clamp assembly of the aforementioned kind which can be used without significant extra expenditure also for sleeve joints and still provides a reliable connection. Moreover, a simple sleeve joint using such a clamp assembly is being provided.

According to a first aspect of the present invention there is provided a clamping ring assembly according to claim 1.
The present invention further provides a pipe joint assembly according to claim 6.
The pins ensure proper alignment of the halves and do not allow any axial movement of the halves, irrespective of dimensional tolerances of the mating parts, proper biting of V shaped recess in the spigot metallic wall.
In use, the clamping halves (1), connected and configured, are inserted in to the socket end restraining chamber and retracted to the inner periphery of socket restraining chamber to create maximum internal diameter to allow insertion of spigot end easily through it. The spigot end of pipe is then pushed in to the socket, up to the required insertion length.

Such a configuration of the clamping assembly has been found to be particularly advantageous, in particular from the point of view of the clamping action and the handling.

Further advantages and embodiments of the invention will become apparent from the description and the accompanying drawing.
In order that the invention may be well understood, there will now be described an embodiment thereof, given by way of example, reference being made to the accompanying drawings, in which:
Fig.1 is a side view and magnified view of an embodiment of a pipe connection with restraining clamp ring assembly for jointing two pipes and pipes to fittings in accordance with the present invention; and
Fig. 2 is an exploded view of the clamp ring assembly according to the present invention.

### DETAILED DESCRIPTION

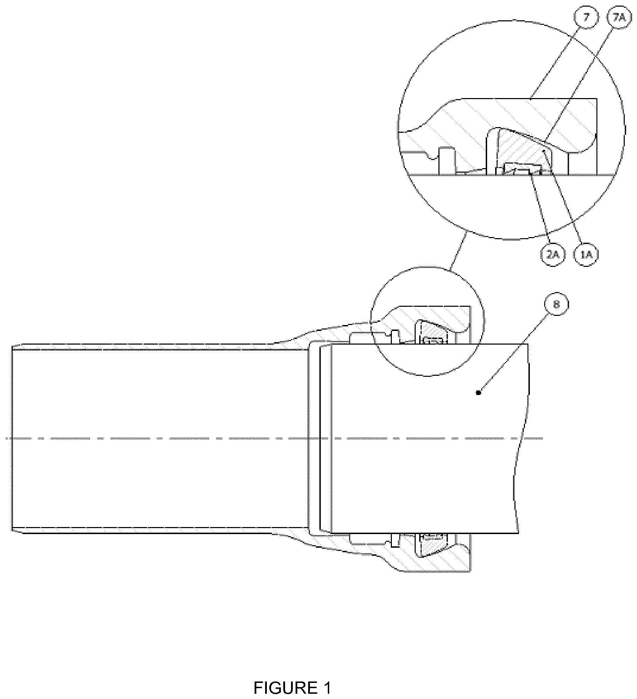

The present invention relates to a Restraining Clamp Ring for jointing two pipes and pipes to fittings to avoid axial separation of pipes or fittings, during pressurization of the pipe line in particular reference to Fig. 1. Several restraining mechanisms to avoid axial separation of pipes or fittings, during pressurization, are available. Most of these mechanisms require factory applied weld bead at the end (spigot end) of pipes. Making weld bead at site condition is very difficult, as it requires special equipments, consumables and expertise. This invention will work without any weld bead for restrained flexible joint.

Clamp ring is designed in two halves (1). Each half (1) has a radially inward metallic projecting edge (2) with at least two sharp "V" shaped recesses (2A). Both ends of each half (1) have an extended lever arm (1B) along pipe's longitudinal axis. Lever arm (1B) has a hole (1C), parallel to pipe's horizontal diametral axis, to pass a clamping bolt (5) through it. End of lever arm (1B) has a rectangular slot (1D), parallel to pipe's horizontal diametral axis, to allow a pin (3) through it. External diameter of this pin (3B), at the middle of its length, is bigger than the length of the slots (W). One end of the pin (3A) is hinged at one of the lever slots (1D), in such a way, so that other end (3A)is free to rotate and can be rest on the slot (1D) of other lever arm (1B). This pin (3), thus rested at both the slots (1D), favors proper alignment of clamping halves (1), with respect to pipe axis, during tightening of clamping bolts (5) and act as a lever fulcrum (4) to transmit tightening torque to biting force at V shaped recess (2A) on the pipe's (8) external periphery.

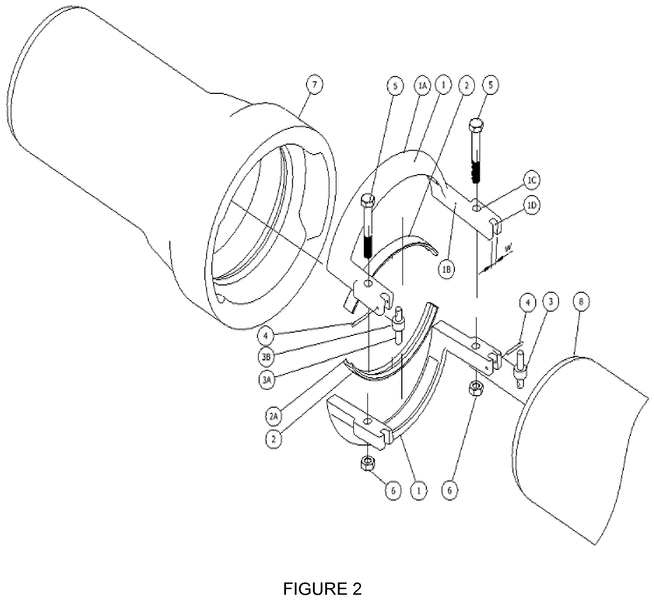

As shown in Fig. 2, the two clamping halves (1) are initially connected, loosely, to each other, by means of two clamping bolts (5), passing through the holes (1C) provided at the end of lever arms (1B). Clamping halves (1) are loosely connected so that internal diameter comprises by these two halves (1), can be varied. Clamping halves (1), so connected, are inserted in to the socket (7) restraining chamber and retracted to the inner periphery (7A) of socket restraining chamber to create maximum internal diameter to allow insertion of spigot (8) end easily through it. Spigot end (8) of pipe is then pushed in to the socket (7), up to the required insertion length. Then the clamping bolts (5) are tightened. Before tightening, it is to make sure that the hinged pin's (3) ends are rested in lever arm slots (1D). These pins transmit the tightening torque to biting force at recesses (2A). The sharp edge of the recess bites the pipe (8) and thus does not allow it to separate during pressurization. During tightening of the clamping bolts (5), the pins (3) in between two slots of lever arms prevent tilting of the clamping halves (1) and act as a fulcrum to transmit the tightening torque to biting force at the sharp "V" shaped recesses (2A) effectively on the periphery of spigot (8) end. Thus, reliability of biting of recesses (2A) is ensured, irrespective of tolerance of components.

The said clamping rings (1) are preferably made with ductile Iron (420/5). Preferably, the tip of the recess (2A) is especially hardened to 510 BHN to ensure easy biting into the spigot end.

## Claims

1. A restraining clamp ring assembly (1) adapted for use with a pipe joint assembly and / or pipe fittings of the type where the pipe joint assembly or pipe fitting includes overlapping of a socket end (7) of one pipe and a taper end (8) of another pipe, the socket having a cavity (7A) with at least two openings (7B); the clamping ring assembly (1) comprising two ring type clamping halves (1A), each clamping half (1A) having two lever arms (1B) extending axially therefrom so as, in use, to extend axially along said other pipe, a hole (1C) being formed in each lever arm (1B) spaced apart from the end of the lever arm (1B), a clamping bolt (5) being engageable through the holes (1C) of adjacent pairs of lever arms (1B) when the clamping halves (1A) are engaged so as to clamp said lever arms (1B) together, each clamping half (1A) further having a "V" shaped recess (2A) provided on its inner circumferential surface by means of which, in use, the taper (8) end of said another pipe is held inside the socket; **characterised in that** the end of each lever arm (1B) includes a rectangular slot (1D) which extends parallel to the hole in said lever arm; and **in that** the clamp ring assembly (1) further includes a pair of pins (3), the external diameter of a middle section (3B) of the length of each pin (3B) being bigger than the external diameter of each end (3A) of each pin (3) and being bigger than the width (w) of the slots (1D) such that the ends (3A) of the pins (3) are engageable in said slots (1D) whilst said middle sections (3B) maintain a minimum separation between said ends of said clamping halves (1A), whereby, in use, said middle sections (3B) of said pins (3) act as lever fulcrums (4) during tightening of clamping bolts (5) to transmit tightening torque from said clamping bolts (5) into biting force of V shaped recesses (2A) into the external periphery of said another pipe.

2. A restraining clamp ring as claimed in claim 1, wherein each clamping half (1A) includes a radially inward metallic projecting edge (2) which includes at least two sharp "V" shaped recesses (2A).

3. A restraining clamp ring as claimed in claim 1 or claim 2, wherein one end of each pin (3A) is hingedly secured in one the lever slots (1D) of one of the clamping halves (1A), the other end (3A) being freely rotatable about said one end so as to be engageable in one of the lever slots (1D) of the other of the lever arms (1B).

4. A restraining clamp ring as claimed in claim 1, wherein the clamping rings (1) are made of ductile Iron (420 /5).

5. A restraining clamp ring as claimed in any of the preceding claims, wherein the tip of the recess (2A) is hardened to 510 BHN to ensure easy biting into the spigot end.

6. A pipe joint assembly comprising a first pipe having a socket end (7), a second pipe having a taper end (8), the socket end (7) having a cavity (7A) with at least two openings (7B), and a clamping ring assembly (1) according to any of the preceding claims, said ring type clamping halves (1A) being engaged in said socket end (7) of said first pipe with said lever arms extending from said socket end (7) such that each lever arm (1B) of one of said clamping halves (1A) extends parallel and adjacent to one of said lever arms (1B) of the other of said clamping halves (1A) and the holes (1C) and slots (1D) of said adjacent lever arms (1B) are aligned with each other, one of said pins (3) being engaged between each pair of adjacent lever arms (1B) with its ends (3A) engaged in the slots (1D) of the adjacent lever arms (1B) and a clamping bolt being engaged through the holes (1C) of the adjacent lever arms so as to clamp said clamping halves (1A) together, and said taper end (8) of said second pipe being engaged into said socket end (7) of said first pipe between said ring type clamping halves (1A), wherein tightening of the clamping bolts (5) presses the ends of the clamping halves (1A) engaged in the socket towards each other through the lever fulcrum effect of said pins (3), transmitting tightening torque from said clamping bolts (5) into biting force of the V shaped recesses (2A) into the external periphery of second pipe, thereby clamping said second pipe in said first pipe.

## Patentansprüche

1. Rückhalteklemmringanordnung (1), die zur Verwendung mit einer Rohrverbindungsanordnung und/oder Rohrformstücken des Typs geeignet ist, wobei die Rohrverbindungsanordnung oder das Rohrformstück eine Überlappung eines Muffenendes (7) eines Rohrs und eines konischen Endes (8) eines anderen Rohrs beinhaltet, wobei die Muffe einen Hohlraum (7A) mit mindestens zwei Öffnungen (7B) aufweist; wobei die Klemmringanordnung (1) zwei ringförmige Klemmhälften (1 A) umfasst, wobei jede Klemmhälfte (1 A) zwei Hebelarme (1B) aufweist, die sich axial davon erstrecken, sodass sie sich im Gebrauch axial entlang des anderen Rohrs erstrecken, wobei in jedem Hebelarm (1B) eine Bohrung (1C) ausgebildet ist, die von dem Ende des Hebelarms (1B) beabstandet ist, eine Klemmschraube (5), die durch die Bohrungen (1C) angrenzender Paare von Hebelarmen (1B) in Eingriff bringbar ist, wenn die Klemmhälften (1A) in Eingriff stehen, um die Hebelarme (1B) zusammenzuklemmen, wobei jede Klemmhälfte (1A) ferner eine "V"-förmige Aussparung (2A) aufweist, die an ihrer Innenumfangsfläche mit Mitteln bereitgestellt wird, mit denen im Gebrauch das konische (8) Ende des anderen Rohres innerhalb der Muffe gehalten wird; **dadurch gekennzeichnet, dass** das Ende jedes Hebelarms (1B) einen rechteckigen Schlitz (1D) beinhaltet, der sich parallel zu der Bohrung in dem Hebelarm erstreckt; und dadurch, dass die Klemmringanordnung (1) ferner ein Paar Stifte (3) beinhaltet, wobei der Außendurchmesser eines mittleren Abschnitts (3B) der Länge jedes Stiftes (3B) größer ist als der Außendurchmesser jedes Endes (3A) jedes Stiftes (3) und größer ist als die Breite (w) der Schlitze (1D), sodass die Enden (3A) der Stifte (3) in die Schlitze (1D) eingreifen können, während die mittleren Abschnitte (3B) einen minimalen Abstand zwischen den Enden der Klemmhälften (1A) beibehalten, wobei im Gebrauch die mittleren Abschnitte (3B) der Stifte (3) während des Anziehens der Klemmschrauben (5) als Hebelstützpunkte (4) wirken, um das Anziehdrehmoment von den Klemmschrauben (5) in eine Beißkraft von V-förmigen Aussparungen (2A) in den Außenumfang des anderen Rohrs zu übertragen.

2. Rückhalteklemmring nach Anspruch 1, wobei jede Klemmhälfte (1A) eine radial nach innen vorstehende metallische Kante (2) beinhaltet, die mindestens zwei scharfe "V"-förmige Aussparungen (2A) beinhaltet.

3. Rückhalteklemmring nach Anspruch 1 oder Anspruch 2, wobei ein Ende jedes Stifts (3A) gelenkig in einem der Hebelschlitze (1D) einer der Klemmhälften (1A) befestigt ist, wobei das andere Ende (3A) um dieses eine Ende frei drehbar ist, sodass es in einen der Hebelschlitze (1D) des anderen der Hebelarme (1B) eingreifen kann.

4. Rückhalteklemmring nach Anspruch 1, wobei die Klemmringe (1) aus duktilem Eisen (420 /5) hergestellt sind.

5. Rückhalteklemmring nach einem der vorhergehenden Ansprüche, wobei die Spitze der Aussparung (2A) auf 510 BHN gehärtet ist, um ein leichtes Einbeißen in das Zapfenende zu gewährleisten.

6. Rohrverbindungsanordnung, umfassend ein erstes Rohr mit einem Muffenende (7), ein zweites Rohr mit einem konischen Ende (8), wobei das Muffenende (7) einen Hohlraum (7A) mit mindestens zwei Öffnungen (7B) aufweist, und eine Klemmringanordnung (1) nach einem der vorhergehenden Ansprüche, wobei die ringförmigen Klemmhälften (1A) in das Muffenende (7) des ersten Rohrs eingreifen, wobei sich die Hebelarme von dem Muffenende (7) so erstrecken, dass jeder Hebelarm (1B) einer der Klemmhälften (1A) parallel und angrenzend zu einem der Hebelarme (1B) der anderen der Klemmhälften (1A) verläuft und die Bohrungen (1C) und Schlitze (1D) der angrenzenden Hebelarme (1B) miteinander ausgerichtet sind, wobei einer der Stifte (3) zwischen jedem Paar angrenzender Hebelarme (1B) mit seinen Enden (3A) in die Schlitze (1D) der angrenzenden Hebelarme (1B) eingreift und ein Klemmbolzen durch die Bohrungen (1C) der angrenzenden Hebelarme eingreift, um die Klemmhälften (1A) zusammenzuklemmen, und wobei das konische Ende (8) des zweiten Rohrs in das Muffenende (7) des ersten Rohrs zwischen den ringförmigen Klemmhälften (1A) eingreift, wobei ein Anziehen der Klemmbolzen (5) die Enden der Klemmhälften (1A), die in der Fassung in Eingriff stehen, durch die Hebel-Drehpunktwirkung der Stifte (3) gegeneinander drückt, wodurch ein Anzugsdrehmoment von den Klemmbolzen (5) in eine Beißkraft der V-förmigen Aussparungen (2A) in den Außenumfang des zweiten Rohrs übertragen wird, wodurch das zweite Rohr in dem ersten Rohr festgeklemmt wird.

## Revendications

1. Ensemble d'anneau de serrage de retenue (1) adapté pour une utilisation avec un ensemble de joint de tuyau et/ ou des raccords de tuyau du type où l'ensemble de joint de tuyau ou le raccord de tuyau comprend le chevauchement d'une extrémité à douille (7) d'un tuyau et d'une extrémité conique (8) d'un autre tuyau, la douille ayant une cavité (7A) avec au moins deux ouvertures (7B) ; l'ensemble d'anneau de serrage (1) comprenant deux moitiés de serrage de type annulaire (1 A), chaque moitié de serrage (1 A) ayant deux bras de levier (1B) s'étendant axialement à partir de celui-ci de manière à, en utilisation, s'étendre axialement le long dudit autre tuyau, un trou (1C) étant formé dans chaque bras de levier (1B) éloigné de l'extrémité du bras de levier (1B), un boulon de serrage (5) pouvant s'engager à travers les trous (1C) de paires adjacentes de bras de levier (1B) lorsque les moitiés de serrage (1A) sont engagées de manière à serrer lesdits bras de levier (1B) ensemble, chaque moitié de serrage (1A) ayant en outre un évidement en forme de « V » (2A) fourni sur sa surface circonférentielle intérieure au moyen duquel, en utilisation, l'extrémité conique (8) dudit autre tuyau est maintenue à l'intérieur de la douille ; **caractérisé en ce que** l'extrémité de chaque bras de levier (1B) comprend une fente rectangulaire (1D) qui s'étend parallèlement au trou dans ledit bras de levier ; et **en ce que** l'ensemble d'anneau de serrage (1) comprend en outre une paire de broches (3), le diamètre extérieur d'une section médiane (3B) de la longueur de chaque broche (3B) étant plus grand que le diamètre extérieur de chaque extrémité (3A) de chaque broche (3) et étant plus grand que la largeur (w) des fentes (1D) de sorte que les extrémités (3A) des broches (3) peuvent s'engager dans lesdites fentes (1D) tandis que lesdites sections médianes (3B) maintiennent une séparation minimale entre lesdites extrémités desdites moitiés de serrage (1A), moyennant quoi, en utilisation, lesdites sections médianes (3B) desdites broches (3) agissent comme des pivots de levier (4) durant le serrage des boulons de serrage (5) pour transmettre le couple de serrage à partir desdits boulons de serrage (5) dans la force de morsure des évidements en forme de V (2A) dans la périphérie extérieure dudit autre tuyau.

2. Anneau de serrage de retenue selon la revendication 1, dans lequel chaque moitié de serrage (1A) comprend un bord en saillie métallique radialement vers l'intérieur (2) qui comprend au moins deux évidements en forme de « V » pointus (2A).

3. Anneau de serrage de retenue selon la revendication 1 ou la revendication 2, dans lequel une extrémité de chaque broche (3A) est solidement fixée dans une des fentes de levier (1D) d'une des moitiés de serrage (1A), l'autre extrémité (3A) étant librement rotative autour de ladite une extrémité de manière à pouvoir être engagée dans une des fentes de levier (1D) de l'autre des bras de levier (1B).

4. Anneau de serrage de retenue selon la revendication 1, dans lequel les anneaux de serrage (1) sont fabriqués en fonte ductile (420 /5).

5. Anneau de serrage de retenue selon l'une quelconque des revendications précédentes, dans lequel l'extrémité de l'évidement (2A) est durcie à 510 BHN afin de s'assurer de la morsure aisée dans l'extrémité mâle.

6. Ensemble de joint de tuyau comprenant un premier tuyau ayant une extrémité à douille (7), un deuxième tuyau ayant une extrémité conique (8), l'extrémité à douille (7) ayant une cavité (7A) avec au moins deux ouvertures (7B), et un ensemble d'anneau de serrage (1) selon l'une quelconque des revendications précédentes, lesdites moitiés de serrage de type annulaire (1A) étant engagées dans ladite extrémité de douille (7) dudit premier tuyau avec lesdits bras de levier s'étendant depuis ladite extrémité de douille (7) de sorte que chaque bras de levier (1B) d'une desdites moitiés de serrage (1 A) s'étend parallèlement et adjacente à l'un desdits bras de levier (1B) de l'autre desdites moitiés de serrage (1A) et les trous (1C) et les fentes (1D) desdits bras de levier adjacents (1B) sont alignés l'un par rapport à l'autre, une desdites broches (3) étant engagée entre chaque paire de bras de levier adjacents (1B) avec ses extrémités (3A) engagées dans les fentes (1D) des bras de levier adjacents. (1B) et un boulon de serrage étant engagé à travers les trous (1C) des bras de levier adjacents de manière à serrer lesdites moitiés de serrage (1A) ensemble, et ladite extrémité conique (8) dudit deuxième tuyau étant engagée dans ladite extrémité de douille (7) dudit premier tuyau entre lesdites moitiés de serrage de type annulaire (1 A), dans lequel le serrage des boulons de serrage (5) presse les extrémités des moitiés de serrage (1A) engagées dans la douille l'une vers l'autre à travers un effet de pivot de levier desdites broches (3), transmettant le couple de serrage desdits boulons de serrage (5) en force de morsure des évidements en forme de V (2A) dans la périphérie extérieure du deuxième tuyau, serrant ainsi ledit deuxième tuyau dans ledit premier tuyau.
